**Europäisches Patentamt**

**European Patent Office**

**Office européen des brevets**

(19)

(11) Veröffentlichungsnummer: **0 163 259**

**B1**

# EUROPÄISCHE PATENTSCHRIFT

(12)

(45) Veröffentlichungstag der Patentschrift:
16.03.88

(21) Anmeldenummer: **85106338.8**

(22) Anmeldetag: **23.05.85**

(51) Int. Cl.⁴: **B 23 K 3/04** //
**H05K3/34**

(54) **Automatische Lötanlage.**

(30) Priorität: **29.05.84 DE 3419974**

(43) Veröffentlichungstag der Anmeldung:
**04.12.85 Patentblatt 85/49**

(45) Bekanntmachung des Hinweises auf die Patenterteilung:
**16.03.88 Patentblatt 88/11**

(84) Benannte Vertragsstaaten:
**BE CH FR IT LI NL SE**

(56) Entgegenhaltungen:
**DD-A-127 037**
**US-A-3 717 743**
**US-A-3 926 360**

(73) Patentinhaber: **Hohnerlein, Ernst, Ringstrasse 7,
D-6983 Kreuzwertheim (DE)**

(72) Erfinder: **Hohnerlein, Ernst, Ringstrasse 7, D-6983
Kreuzwertheim (DE)**

(74) Vertreter: **Schieferdecker, Lutz, Dipl.- Ing.,
Patentanwälte Dr.- Ing. P.K. Holzhäuser Dipl.-
Met. W. Goldbach Dipl.- Ing. L. Schieferdecker
Herrnstrasse 37, D-6050 Offenbach am Main (DE)**

## Beschreibung

Die Erfindung betrifft eine automatische Lötanlage, z. B. für Lötrahmen, mit einer Transporteinrichtung und einer Heizvorrichtung, die aus einer Anzahl von in Förderrichtung im Abstand voneinander angeordneten Heizkörpern besteht.

Bei bekannten Lötanlagen der genannten Art sind als Heizkörper entweder Konvektionsheizkörper, Guß-Strahlerplatten, Infrarotelemente oder dergl. vorgesehen, deren Temperatur grundsätzlich steuerbar bzw. regelbar ist.

Für den Fall, daß in der Lötanlage leicht entzündbare Dämpfe auftreten, ist es nicht nur erforderlich, daß die Heiztemperaturen und die Wärmeabgabe genau eingehalten werden, sondern es ist wünschenswert, daß auch die Wärmezufuhr im Falle einer möglichen Selbstentzündung der Dämpfe rasch unterbrochen werden kann. Dies ist bei den bekannten Lötanlagen nicht gegeben.

Der Erfindung liegt daher die Aufgabe zugrunde, eine Lötanlage der genannten Art so auszubilden, daß nicht nur ein vorbestimmter Temperaturverlauf genau eingehalten werden kann, sondern es muß zusätzlich auch die Möglichkeit geschaffen werden, daß bei Bedarf eine Unterbrechung der Wärmeabstrahlung möglichst rasch eintritt.

Zur Lösung dieser Aufgabe sieht die Erfindung vor, daß als Heizkörper Strahlungsheizkörper vorgesehen sind, daß die Heizkörper je mindestens ein Heizelement aufweisen und daß die Heizkörper mit ihrer Abstrahlungsfläche aus einer Arbeitsstellung um eine Lagerachse in eine Ruhestellung verschwenkbar sind, in welche eine Wärmeabstrahlung zur Transporteinrichtung hin nicht möglich ist.

Bei Bedarf kann daher jeder Heizkörper aus einer Arbeitsstellung in eine unwirksame Stellung bewegt werden, die ferner so gewählt ist, daß jegliche Wärmeabgabe in den möglichen Gefahrenbereich unterbunden ist.

Bei einer vorteilhaften Ausgestaltung der Erfindung sind die Heizkörper mit Reflektorgehäusen versehen und als Einheit aus der Arbeitsstellung in die unwirksame Stellung verschwenkbar. Zweckmäßigerweise sind ferner wärmeisolierende bzw. wärmeabsorbierende Querwände zwischen benachbarten Heizkörpern derart angeordnet, daß die Abstrahlungsflächen der Heizkörper in der Ruhestellung auf sie gerichtet sind.

Zweckmäßige Ausgestaltungen und Weiterbildungen der Erfindung gehen aus den Unteransprüchen hervor.

Die Erfindung wird nachstehend anhand eines Ausführungsbeispieles, das in der Zeichnung dargestellt ist, näher beschrieben. Dabei zeigen:

Fig. 1: einen Heizkörper im Schnitt in seiner Arbeitsstellung;

Fig. 2: einen Heizkörper im Schnitt in der Ruhestellung;

Fig. 3: eine Ansicht des Heizkörpers in Richtung des Pfeiles III in Fig. 1 und

Fig. 4 in Seitenansicht sowie schematisch einen Teil der automatischen Lötanlage mit mehreren Heizkörpern.

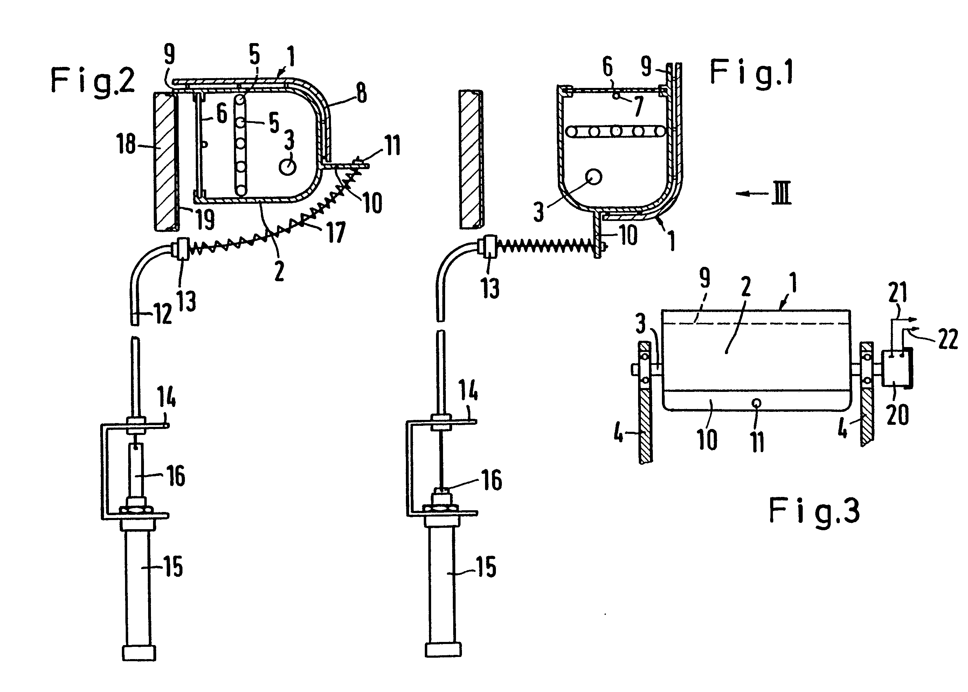

Jeder Heizkörper 1 umfaßt gemäß Fig. 1 ein wannenförmiges Reflektorgehäuse 2, welches um eine Lagerwelle 3 schwenkbar in seitlichen Lagerschienen 4 gelagert ist. In dem Reflektorgehäuse 2 sind ein oder mehrere Quarz- oder Infrarot-Heizelemente 5 angeordnet.

Als Abstrahlungsfläche 6 und auch als Abdeckung der offenen Seite des Reflektorgehäuses 2 ist ferner eine Glaskeramikplatte vorgesehen, an der außerdem ein Temperaturfühler 7 angebracht ist.

Die in der Ruhestellung gemäß Fig. 2 oben liegende Wand des Reflektorgehäuses 2 trägt eine wärmeisolierende Schicht 8 und ist außerdem mit einem vorstehenden Wandteil 9 versehen.

Das Reflektorgehäuse 2 weist außerdem einen in der Arbeitsposition gemäß Fig. 1 nach unten ragenden Flansch 10 auf. An diesem Flansch 10 ist eine Befestigungsstelle 11 für das eine Ende eines Bowdenzuges 12 vorgesehen. Die Hülle des Bowdenzuges 12 stützt sich einerseits an einer Befestigungsstelle 13 an der einen Lagerschiene 4 und andererseits an einem Schenkel eines Haltebügels 14 ab. Dieser Haltebügel 14 trägt einen als Stellantrieb dienenden Druckluftzylinder 15, mit dessen Kolbenstande 16 das andere Ende des Bowdenzuges 12 verbunden ist.

Zwischen den Befestigungsstellen 12 und 13 des Bowdenzuges 12 ist eine Druckfeder 17 angeordnet.

In der Ruhestellung (Fig. 2) des Heizkörpers 1 ist der Druckluftzylinder 15 drucklos und die Druckfeder 17 ist entspannt. Die Abstrahlungsfläche 6 ist zur Seite gerichtet, wo eine wärmeabsorbierende Wand 18 zugleich als Isolierkörper angeordnet ist. Vorzugsweise besteht die Wand 18 aus Keramik und trägt zusätzlich eine Reflexionsschicht 19. Eine derartige Wand 18 ist neben jedem Heizkörper 1 angeordnet, und in der Ruhestellung stützt sich der Heizkörper 1 mit seinem vorstehenden Wandteil 9 auf der Wand 18 ab. In dieser Lage wird der Heizkörper ferner durch die Schwerkraft gehalten, da die Lagerwelle 3 außermittig angeordnet ist.

Sobald der Druckluftzylinder 15 mit Druck beaufschlagt wird, bewirkt dies ein Verschwenken des Heizkörpers 1 in die Arbeitsstellung gemäß Fig. 1, in welcher die von der Glaskeramikplatte gebildete Abstrahlungsfläche 6 nach oben, d.h. in Richtung auf eine Transporteinrichtung 30 gerichtet ist.

Jedem Heizkörper 1 ist ferner ein Anschlußkasten 20 zugeordnet. Zu diesem führen eine elektrische Zuleitung 21 für die Stromversorgung der Heizelemente 5 und eine Meldeleitung 22 für die Signale des Temperaturfühlers 7. Die Zuleitungen sind zweckmäßigerweise durch die hohle Lagerwelle 3 in das Reflektorgehäuse 2 geführt.

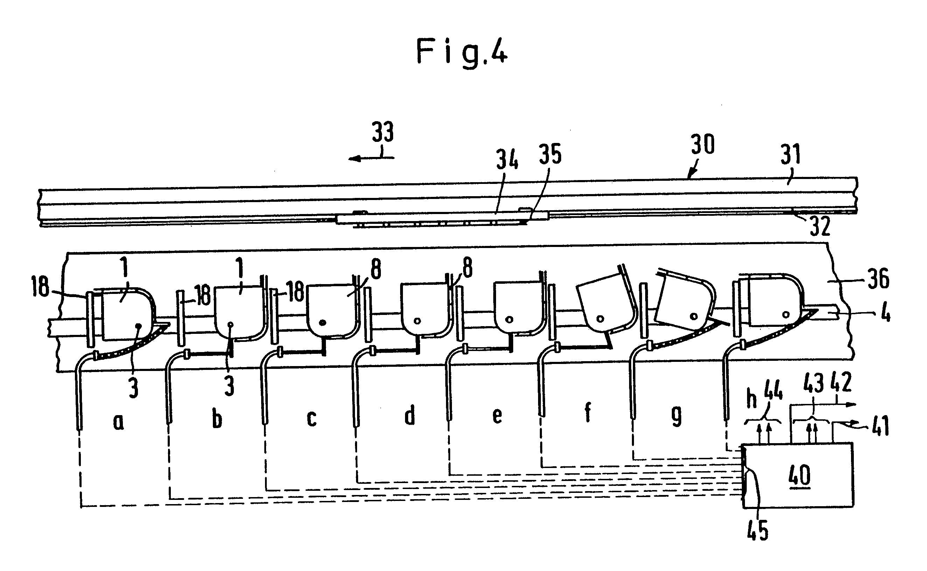

Die Arbeitsweise der automatischen Lötanlage mit ihrer Transporteinrichtung 30 und den Heizkörpern 1 wird nun anhand der Fig. 4 näher erläutert.

In den Seitenwänden 31 der Lötanlage ist ein Förderband 32 gelagert und bewegt sich in Richtung des Pfeiles 33. Auf dem Förderband 32 liegen Lötrahmen 34 in Abständen voneinander und tragen zu bearbeitende Bausteinplatten 35.

Unterhalb des Förderbandes 32 ist die Heizvorrichtung zwischen Seitenwänden 36 angebracht und besteht aus einer größeren Anzahl von Heizkörpern 1. In Fig. 4 sind hintereinander acht solcher Heizkörper 1 dargestellt und als einzelne Stationen mit den Buchstaben a) bis h) bezeichnet.

Ein Lötrahmen 34, dessen relative Lage in an sich bekannter Weise durch nicht dargestellte Mittel elektronisch abgetastet wird, befindet sich gemäß Fig. 4 gerade über den Heizkörpern 1 der Stationen c), d) und e) und hat in Transportrichtung gerade die Station f) verlassen.

Zur Steuerung des im folgenden beschriebenen Arbeitsablaufes ist eine zentrale Steuervorrichtung 40 vorgesehen. Diese ist über eine erste Leitung 41 mit der Antriebsvorrichtung des Förderbandes 32 und über eine zweite Leitung 42 mit dem vorstehend genannten Lagekontrollgeber verbunden.

Über eine Leitungsgruppe 43 ist die Steuervorrichtung 40 mit jedem der Temperaturfühler 7 der Heizkörper 1 verbunden.

Eine Leitungsgruppe 44 verbindet die Steuervorrichtung 40 mit den Heizelementen 5 jedes der Heizkörper 1.

Eine Leitungsgruppe 45 verbindet die Steuervorrichtung 40 mit jeder der Betätigungsvorrichtungen zum Verschwenken der Heizkörper 1.

Die Stromversorgung der Heizelemente 5 wird über die Steuervorrichtung 40 derart geregelt, daß von jedem der Heizkörper 1 die gleiche oder gegebenenfalls unterschiedliche, durch Vorwahl einstellbare Wärmemengen abgegeben werden können, die ferner mittels der Temperaturfühler 7 abtastbar ist. Die Lagesteuerung der Heizkörper 1 erfolgt über die Leitung 42 in Abhängigkeit von der jeweiligen Stellung des Lötrahmens 34.

Aus Fig. 4 ist ersichtlich, daß der Heizkörper 1 in der Station a) sich noch in seiner Ruhestellung befindet, d.h. daß er noch keine Wärme in Form von Strahlung in Richtung der Transporteinrichtung 30 abgibt. Da sich der Lötrahmen 34 jedoch bereits der Station b) nähert, ist der Heizkörper 1 dieser Station b) bereits in seine Arbeitsstellung verschwenkt. Das gleiche gilt für die Heizkörper 1 der Stationen c) bis e).

Der Lötrahmen 34 hat ferner bereits die Stationen f) bis h) verlassen, so daß diese in ihre Ruhestellung verschwenken können. Die Schwenkbewegung ist in der Station f) gerade eingeleitet, in der Station g) fast beendet und in der Station h) befindet sich der Heizkörper 1 bereits in seiner Ruhestellung.

Sobald sich der nächste Lötrahmen 34 der Heizvorrichtung nähert, wird zunächst der Heizkörper 1 der Station h), danach der der Station g) usw. in die Arbeitsstellung verschwenkt. Auf diese Weise ist sichergestellt, daß die Wärmeabgabe nur dort erfolgt, wo sich ein Lötrahmen 34 befindet.

Es ist ferner ersichtlich, daß die Wärme-/Temperatursteuerung so erfolgen kann, daß in jeder der Stationen oder aber in Gruppen von Stationen unterschiedlich viel Wärme abgegeben wird. So ist es beispielsweise möglich, die in Transportrichtung zuerst erreichten Stationen h) und g) auf einen geringeren Temperaturwert bzw. eine geringere Wärmeabgabe einzustellen als die nachfolgenden Stationen und z. B. die letzte Station a) wieder auf eine geringere Strahlungsleistung bzw. Wärmeabgabe einzuregeln.

Über die zum Antrieb des Förderbandes 32 führende Leitung 41 kann schließlich noch an die Steuervorrichtung 40 ein Notsignal gegeben werden für den Fall, daß der Antrieb aus irgendwelchen Gründen stillgesetzt werden muß. Für diesen Fall ist ferner vorgesehen, daß alle Heizkörper 1 in den Heizstationen in Ruhestellung gebracht und gegebenenfalls vollständig abgeschaltet werden. Auf diese Weise werden eine örtliche Überhitzung und ferner die damit verbundene Brandgefahr vermieden.

**Patentansprüche**

1. Automatische Lötanlage, z. B. für Lötrahmen (34) mit einer Transporteinrichtung (30) und einer Heizvorrichtung, die aus einer Anzahl von in Förderrichtung im Abstand voneinander angeordneten Heizkörpern (1) besteht, dadurch gekennzeichnet, daß als Heizkörper (1) Strahlungsheizkörper vorgesehen sind, daß die Heizkörper (1) je mindestens ein Heizelement (5) aufweisen und daß die Heizkörper mit ihrer Abstrahlungsfläche (6) aus einer Arbeitsstellung um eine Lagerwelle (3) in eine Ruhestellung schwenkbar sind, in welcher eine Wärmeabstrahlung zur Transporteinrichtung (30) nicht möglich ist.

2. Lötanlage nach Anspruch 1, dadurch gekennzeichnet, daß wärmeisolierende Wände (18) zwischen den Heizkörpern (1) angeordnet sind und daß die Abstrahlungsflächen (6) der Heizkörper (1) in der Ruhestellung auf die Wände (18) gerichtet sind.

3. Lötanlage nach Anspruch 1, dadurch gekennzeichnet, daß die Heizkörper (1) wannenartig ausgebildete Reflektorgehäuse (2) umfassen und daß Infrarot-Heizstäbe (5) in den Reflektorgehäusen (2) angeordnet sind.

4. Lötanlage nach Anspruch 1, dadurch gekennzeichnet, daß die Heizkörper (1) je als Abdeckung des Reflektorgehäuses (2) und als Abstrahlungsfläche (6) Glaskeramikplatten aufweisen.

5. Lötanlage nach Anspruch 1 bis 4, dadurch gekennzeichnet, daß ein Temperaturfühler (7) an der als Abstrahlungsfläche (6) dienenden Glaskeramikplatte angeordnet ist.

6. Lötanlage nach Anspruch 1 bis 5, dadurch gekennzeichnet, daß die Heizelemente (5) jedes Heizkörpers (1) an einen Temperaturregler angeschlossen sind.

7. Lötanlage nach Anspruch 1 bis 6, gekennzeichnet durch eine zentrale Steuervorrichtung (40, Programmsteuervorrichtung) für eine einstellbare Temperatursteuerung der Heizkörper (1).

8. Lötanlage nach Anspruch 7, dadurch gekennzeichnet, daß die Steuervorrichtung (40) über eine Signalleitung (42) mit der Antriebsvorrichtung der Transporteinrichtung (30) verbunden ist.

9. Lötanlage nach Anspruch 1 bis 8, dadurch gekennzeichnet, daß die in der Ruhestellung zur Transporteinrichtung (30) hin gerichtete Wand des Reflektorgehäuses (2) außen mit einer wärmeisolierenden Schicht (8) versehen ist.

10. Lötanlage nach Anspruch 1 bis 9, dadurch gekennzeichnet, daß jeder Heizkörper (1) über einen Bowdenzug (12) mit einem Stellantrieb (15, 16) verbunden ist.

11. Lötanlage nach Anspruch 10, dadurch gekennzeichnet, daß als Stellantrieb eine pneumatisch betätigte Kolben-Zylindereinheit (15, 16) vorgesehen ist.

12. Lötanlage nach Anspruch 1 bis 11, dadurch gekennzeichnet, daß jedem Heizkörper (1) ein Anschlußkasten (20) zugeordnet ist und daß die elektrischen Zuleitungen (21, 22) durch eine jeweils hohle Lagerwelle (3) in den Heizkörper (1) geführt sind.

13. Lötanlage nach Anspruch 1, dadurch gekennzeichnet, daß die Ansteuerung der Heizkörper (1) in der Weise erfolgt, daß sie jeweils abgeschaltet bzw. verschwenkt werden, wenn ein Lötrahmen (34) vorbeigefahren ist.

14. Lötanlage nach Anspruch 1, dadurch gekennzeichnet, daß die Stromversorgung der Heizelemente (5) über die Steuervorrichtung (40) derart geregelt wird, daß von jedem der Heizkörper (1) die gleiche, durch Vorwahl einstellbare Wärmestrahlung abgegeben wird.

15. Lötanlage nach Anspruch 1, dadurch gekennzeichnet, daß die Temperatursteuerung der Heizkörper (1) bzw. Heizelemente (5) derart erfolgt, daß jeder Heizkörper (1) oder Gruppen von Heizkörpern (1) unterschiedliche Wärmestrahlung abgeben.

## Claims

1. An automatic soldering apparatus, for example for soldering frames (34), comprising a feed device (30) and a heating device, which consists of a number of heating members (1) arranged with a spacing between them in the feed direction characterized in that the heating members (1) are in the form of radiating heating members, in that the heating members (1) each have at least one heating element (5) and in that the radiating surfaces (6) of the heating members are able to be turned out of an operative position around a pivot shaft (3) into a non-operative position, in which the radiation of heat to the feed device (30) is not possible.

2. The soldering apparatus as claimed in claim 1 characterized in that thermally insulating walls (18) are arranged between the heating members (1) and in that in the non-operative position the radiating surfaces (6) of the heating members (1) are directed towards the walls (18).

3. The soldering apparatus as claimed in claim 1 characterized in that the heating members (1) comprising reflectors housings (2) with a trough-like construction and in that infra-red heating rod elements (5) are arranged in the reflector housings (2).

4. The soldering apparatus as claimed in claim 1 characterized in that the heating members (1) each have glass ceramic plates as the cover of the reflector housing (2) and as a radiating surface (6).

5. The soldering apparatus as claimed in claims 1 through 4 characterized in that a temperature sensor (7) is arranged on the glass ceramic plate serving as a radiating surface (6).

6. The soldering apparatus as claimed in claims 1 through 5 characterized in that the heating elements (5) of each heating member (1) are connected with the an automatic temperature controller.

7. The soldering apparatus as claimed in claims 1 through 6 characterized by a central controlling device (40, program control device) for an adjustable temperature control of the heating members (1).

8. The soldering apparatus as claimed in claim 7 characterized in that the control device (40) is connected via a signal conducting line (42) with the drive device of the feed device (30).

9. The soldering apparatus as claimed in claims 1 through 8 characterized in that the wall, which in the non-operative position is directed towards the feed device (30), is externally provided with a thermally insulating layer (8).

10. The soldering device as claimed in claims 1 through 9 characterized in that each heating member (1) is connected via a bowden control cable (12) with an actuator (15 and 16).

11. The soldering apparatus as claimed in claim 10 characterized in that the actuator is in the form of a pneumatically operated piston and cylinder unit (15 and 16).

12. The soldering apparatus as claimed in claims 1 through 11 characterized in that a connection box (20) is associated with each heating member (1) and in that the electrical leads (21 and 22) extend respectively through hollow bearing shafts (3) into the heating members (1).

13. The soldering apparatus as claimed in claim 1 characterized in that the operation of the heating members (1) takes place in such a manner that they are respectively turned off or pivoted when a soldering frame (34) has moved past.

14. The soldering apparatus as claimed in claim 1 characterized in that the current supply to the heating elements (5) is so automatically controlled via the control device (40) that each of the heating members (1) gives off the same thermal radiation as set by preselection.

15. The soldering apparatus as claimed in claim 1 characterized in that the temperature control of the heating members (1) or the heating elements (5) is carried out in such a manner that each heating member (1) or group of heating members (1) gives off a different amount of heat.

## Revendications

1. Installation automatique de brasage, par exemple pour un châssis brasé (34) comportant un système de transport (30) et un dispositif de chauffe se composant d'un certain nombre de corps de chauffe (1) disposés écartés les uns des autres dans le sens du convoyage, caractérisée par le fait que des corps de chauffe par rayonnement (1) sont utilisés en tant que corps de chauffe (1), que ceux-ci présentent au moins un élément de chauffe (5) et que le corps de chauffe et sa surface rayonnante (6) peuvent être pivotés d'une position de travail en une position de repos, autour d'un arbre porteur (3), un rayonnement de chaleur vers le système transporteur (30) n'étant pas possible en position de repos.

2. Installation de brasage selon revendication 1, caractérisée par le fait que des parois (18) calorifuges sont disposées entre les corps de chauffe (1) et que les surfaces de rayonnement (6) des corps de chauffe (1) sont dirigées vers les parois (18) en position de repos.

3. Installation de brasage selon revendication 1, caractérisée par le fait que les corps de chauffe (1) renferment des boîtiers de réflecteurs (2) en forme de cuvettes et que les barreaux de chauffe (5) à infrarouges sont disposés dans les boîtiers de réflecteurs (2).

4. Installation de brasage selon revendication 1, caractérisée par le fait que les corps de chauffe (1) présentent des plaques vitrocérames servant chacune de recouvrement du boîtier de réflecteur (2) et de surface de rayonnement (6).

5. Installation de brasage selon revendications 1 à 4 caractérisée par le fait qu'un capteur de température (7) est disposé sur la plaque cérame servant de surface de rayonnement (6).

6. Installation de brasage selon revendications 1 à 5 caractérisée par le fait que l'élément de chauffe (5) de chaque corps de chauffe (1) est branché à un thermostat.

7. Installation de brasage selon revendications 1 à 6 caractérisée par un dispositif de commande centralisée (40, dispositif de commande programmée) pour la régulation de la température variable des corps de chauffe (1).

8. Installation de brasage selon revendication 7, caractérisée par le fait que le dispositif de commande 40 est relié par une ligne de transfert de signaux (42) au système de motorisation du dispositif de transport (30).

9. Installation de brasage selon revendications 1 à 8 caractérisée par le fait que la paroi du boîtier de réflecteur (2) dirigée en position de repos vers le système transporteur (30) présente extérieurement une couche calorifuge (8).

10. Installation de brasage selon revendications 1 à 9, caractérisée par le fait que chaque corps de chauffe (1) est relié par un Bowden (12) à un vérin (15, 16).

11. Installation de brasage selon revendication 10, caractérisée par le fait que le vérin correcteur est constitué par une unité cylindre-piston pneumatique (15, 16).

12. Installation de brasage selon revendications 1 à 11, caractérisée par le fait que chaque corps de chauffe (1) est subordonné à un coffret de jonction (20) et que les conducteurs d'arrivée de courant électrique (21, 22) sont amenés au corps de chauffe (1) chaque fois par un arbre porteur creux (3).

13. Installation de brasage selon revendication 1, caractérisée par le fait que la commande des corps de chauffe (1) est conçue de telle manière qu'elle soit arrêtée ou pivotée lorsqu'un châssis (34) passe devant.

14. Installation de brasage selon revendication 1, caractérisée par le fait que l'alimentation en courant des éléments de chauffe (5) est réglée par un dispositif de commande (40) de telle manière que chaque corps de chauffe (1) émette le même rayonnement de chaleur, réglable par présélection.

15. Installation de brasage selon revendication 1, caractérisée par le fait que la régulation de température des corps de chauffe (1) ou des éléments de chauffe (5) est telle que chaque corps de chauffe (1) ou groupe de corps de chauffe (1) émette des rayonnements de chaleur différents des autres.

Fig.2

Fig.1

Fig.3

0 163 259

# Fig.4